# EUROPEAN PATENT SPECIFICATION

(11) **EP 0 757 996 B1**
(45) Date of publication and mention of the grant of the patent: **09.09.1998**
(21) Application number: 96110214.2
(22) Date of filing: 25.06.1996
(51) Int. Cl.: C08F 10/00, C08F 4/64

(54) **Catalyst for the (co)polymerization of olefins and process using the same**
Katalysator für Olefin-(Co)-Polymerisation und Verfahren unter Verwendung desselben
Catalyseur pour la (co)polymérisation d'oléfines et procédé utilisant celui-ci

(30) Priority: 09.08.1995 IT MI951766
(43) Date of publication of application: 12.02.1997
(73) Proprietor: ENICHEM S.p.A., 20124 Milano (IT)
(72) Inventor: Gila, Liliana, Cameriano (Novara) (IT); Proto, Antonio, Novara (IT); Ballato, Evelina, Crusinallo di Omegna (Novara) (IT); Vigliarolo, Diego, RHO (Milano) (IT); Lugli, Gabriele, S.Donato Milanese (MI) (IT)
(74) Representative: Gennari, Marco, Dr.

(56) References cited:
- EP-A- 0 672 676
- JOURNAL OF ORGANOMETALLIC CHEMISTRY, vol. 51, 1973, pages 241-271, XP000608464 JURGENS HS:

## Description

The present invention relates to a catalyst for the (co)polymerization of olefins and a polymerization process using said catalyst.

More specifically, the present invention relates to a catalyst for the (co)polymerization of ethylene and/or α-olefins having at least three carbon atoms, which is based on a complex of a transition metal with cyclooctatetraene.

It is generally known in the art that ethylene and/or homologous α-olefins can be polymerized with processes at low, medium or high pressure with catalysts based on a transition metal, generally known as Ziegler-Natta type catalysts.

Catalysts which are useful for the purpose, both homogeneous and heterogeneous, are generally formed by putting a precursor consisting of a compound of a transition metal, preferably of groups 4 and 5 of the periodic table of elements (according to the group numbering recommended by IUPAC), in contact with a co-catalyst consisting of an organometallic compound or a hydride of metals of groups 1, 2 or 13 of the periodic table, operating in suspension, in solution, or also without solvents or diluents. For this known technique reference can be made to the description of J.Boor in the publication "Ziegler-Natta Catalysts and Polymerization", Academic Press, New York (1979).

A particular group of these catalysts active in the (co)polymerization of ethylene consists of the combination of an organo-oxygenated derivative of aluminium (commonly called aluminoxane) with an η⁵-cyclopentadienyl derivative of a metal such as titanium, zirconium or hafnium (group 4), also commonly called metallocene. For a known technique for the preparation of the above compounds, reference should be made, as an example, to the publication of H.Sinn, W.Kaminsky, in Adv. Organomet. Chem., vol. 18(1980), page 99 and U.S. patent 4.542.199.

Other groups of compounds suitable for the formation of catalysts of the Ziegler-Natta type are known in the art, such as for example, organometallic derivatives defined as metal-arenes in which an aromatic group (arene) is linked with a "π" bond to a transition metal preferably selected from metals of groups 4 to 6 of the periodic table. These metal-arenes are capable of polymerizing olefins when combined with an organometallic derivative of aluminium different from aluminoxane.

Many of the above catalysts, both homogeneous and heterogeneous, are characterized by high polymerization activities and enable high productivities to be reached. Increasing demands in the field however, together with the necessity of further reducing the content of metals in the polyolefins thus obtained, to widen their use in the field of food packaging, lead to the continual search for catalysts and polymerization processes characterized by an even greater activity and productivity.

An important aspect also lies in the constant necessity for improving sterical control in the (co)polymerization of α-olefins, such as propylene for example, to increase the crystallinity degree of the polymer obtained.

There is still therefore a great demand for catalysts active in the (co)polymerization of olefins, especially for the production, with high productivities, of polymers of the desired degree, particularly polyethylenes and polypropylenes. In fact, the demand for "tailor-made" polymers suitable for more and more specific uses, is continually growing.

Whereas extensive studies have been carried out on catalytic systems based on the salts of Ti, Zr or V combined with aluminium alkyls or on metallocenes combined with aluminoxanes, to obtain olefin polymers with a high molecular weight, catalytic systems based on complexes of transition metals with cyclo-olefins have more often been used in the field of oligomerization.

In the publication "J. of Organometallic Chemistry", vol. 51(1973), pages 241-271, H.S. Jurgens et al. describes the preparation of zirconium-cyclooctatetraene having the formula COTZrX₂, wherein COT is a divalent cyclooctatetraene ligand and X is chloride, methyl, ethyl, allyl or crotyl. These complexes are used for the stereospecific dimerization of butadiene.

U.S. patent 3.932.477 describes complexes of niobium and tantalium with cyclooctatetraene for the oligomerization of ethylene, which are not able however to give polyethylene with a high molecular weight.

U.S. patent 3.450.728 describes the synthesis of complexes of Ti, Zr and V with cyclooctatetraene. Complexes are described in which the metal is linked to one or two molecules of COT, and a method is disclosed for their synthesis. Although this document generally mentions the use of these complexes in the polymerization of olefins, no detail or illustration is given in this respect.

Although the known art, previously referred to, does not consider the use of complexes with cyclooctatetraene of metals of group 4 of the periodic table of elements in polymerization catalysis, as being particularly advantageous, the Applicant has now surprisingly found that these complexes, suitably modified, can be advantageously used for the preparation of a catalyst for the (co)polymerization of olefins.

A first object of the present invention therefore relates to a catalyst active in the (co)polymerization of α-olefins comprising at least one complex of a metal M selected from titanium, zirconium or hafnium and at least one compound of a metal M' different from M, characterized in that:
(A) said complex of a metal M consists of an adduct obtained by putting an organometallic derivative of aluminium in contact with a complex having the formula (I)

   **(COT)MR**_{**1**}**R**_{**2**}**L**_{**n**} **(I)**

   wherein:
   COT represents a divalent cyclooctatetraene ligand optionally substituted on the ring;
   M is a metal selected from titanium, zirconium and hafnium, preferably zirconium;
   R₁ and R₂ each independently represent a monovalent group having an anionic nature, or R₁ and R₂ together represent a divalent anionic group;
   L is a neutral ligand, preferably containing an oxygen atom;
   "n" is 0 or 1, preferably 0;
(B) said compound of a metal M' consists of an organo-oxygenated derivative of aluminium, gallium or tin.

A second object of the present invention relates to a process for the (co)polymerization of α-olefins, wherein the above catalyst is used.

The term "(co)polymerization of α-olefins" as used hereafter in the present description and claims, refers to any homopolymerization process of ethylene or any other polymerizable α-olefin having more than two carbon atoms, such as, for example, propylene, 1-butene, styrene, 1-octene as well as copolymerization processes of ethylene or other α-olefins with each other or with other copolymerizable vinyl monomers also optionally containing heteroatoms.

The catalyst of the present invention comprises a complex of a metal M selected from titanium, zirconium or hafnium, preferably zirconium, hereinafter also called component (A), which is obtained starting from a cyclooctatetraene complex of M having the above formula (I) and an organometallic derivative of aluminium, and an organo-oxygenated derivative of a metal M' selected from aluminium, gallium or tin, hereinafter also called component (B).

In the formation of component (A) according to the present invention, the above organometallic derivative of aluminium can be any compound in which an aluminium atom is linked to an aliphatic or aromatic residue with an θ-covalent Al-C bond. This organometallic derivative of aluminium is preferably an aluminiumalkyl or an aluminiumalkylhalide or an aluminoxane.

Aluminiumalkyls and aluminiumalkylhalides which are suitable for the present invention are compounds which can be represented by the following general formula (II):

**AlR**_{**m**}**X**_{**3-m**} **(II)**

wherein:
each R is independently a linear or branched alkyl residue having from 1 to 10 crabon atoms;
each X is a halogen atom, preferably Cl or Br; and
m is a decimal number between 0.5 and 3, preferably between 1.5 and 3.

Non-limiting examples of aluminium compounds having formula (II) are trimethylaluminium, triethylaluminium, triisobutylaluminium, aluminiumethylsesquichloride, dibutylaluminium chloride, ethylaluminium dichloride, diisobutylaluminiumbromide.

Aluminoxanes suitable for the purposes of the present invention are organic compounds of aluminium characterized by the presence of the bond Al-O-Al, with a variable O/Al ratio, depending on the different processes known in the art, by reaction, under controlled conditions, of an aluminium alkyl, or halide of aluminiumalkyl, with water or other compounds containing controlled quantities of available water, such as, for example, in the case of aluminium trimethyl, with a salt hydrate, such as aluminium sulfate hexahydrate, copper sulfate pentahydrate and iron sulfate pentahydrate. Aluminoxanes preferably used for the formation of the polymerization catalyst of the present invention are oligo- or poly-meric, cyclic or linear compounds, basically consisting of repetitive units having formula (III): 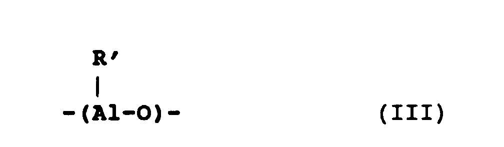 wherein R' is a C₁-C₆ alkyl group.

Each molecule of aluminoxane normally contains from 4 to 70, preferably from 10 to 30, repetitive units which may also not all be equal to each other, but may contain different R' groups.

Components (A) obtained using organometal derivatives of aluminium having formula (II) or (III) wherein each R or R' is independently a linear or branched alkyl residue having from 2 to 4 carbon atoms, have proved to be particularly advantageous for the purposes of the present invention.

Among these aluminium trialkyls, such as aluminium triethyl, aluminium tributyl and aluminium triisobutyl are preferred.

The above cyclooctatetraene complexes of formula (I) which can be used in the formation of component (A) of the present invention, form a group of compounds already known in the art. In these complexes the divalent COT ligand (formally dianionic) is a ligand having an aromatic nature deriving from a molecule of 1,3,5,7-cyclooctatetraene, formally by the addition of two electrons. Complexes of COT with metals of group 4 of the periodic table, particularly zirconium, and methods for their preparation, are described in literature, for example in the publication of H.J.Kablitz et al. previously mentioned, and in the publication of P.Berno et al., "J. of the Chemical Soc., Dalton Trans.", 1991, page 3093, whose contents are herein included as reference.

In the previous formula (I), COT represents both a cyclooctatetraene ligand having the formula C₈H₈²⁻, and a dianionic cyclooctatetraene substituted on the ring with from 1 to 8 groups selected from halogens or aliphatic or aromatic organic groups preferably having from 1 to 10 carbon atoms, which can possibly also contain one or more heteroatoms selected from O, N, Si, Ge, P, S or halogen, preferably Si, Cl or Br. Preferred substituents are aliphatic, linear, cyclic or branched alkyl groups, preferably selected from methyl, ethyl, propyl, isopropyl, butyl, isobutyl, phenyl, benzyl and trimethylsilyl.

According to a preferred embodiment of the present invention, the groups R₁ and R₂ in the above formula (I) each independently represent a hydride or halide, such as chloride or bromide, a C₁-C₈ alkyl group such as, for example, methyl, ethyl, butyl, isopropyl, isoamyl, octyl, benzyl, a C₃-C₁₂ alkylsilyl group such as, for example, trimethylsilyl, triethylsilyl or tributylsilyl, a cycloalkyl group such as cyclopentyl or cyclohexyl, a C₆-C₁₀ aryl group such as phenyl or toluyl, a C₁-C₈ alkoxyl group such as, for example, methoxyl, ethoxyl, iso- or sec-butoxyl, or again, a C₂-C₁₀ dialkylamide or C₄-C₂₀ alkylsilylamide group, preferably of the type represented by the general formula -NR''R''' wherein R'' and R''' are alkyl groups having from 1 to 4 carbon atoms, such as, for example, methyl, ethyl or butyl groups, or, in the case of alkylsilylamides, alkylsilyl groups having from 3 to 6 carbon atoms, such as, for example, trimethylsilyl or triethylsilyl. When R₁ and R₂ jointly form a divalent group, they form together with the metal M a ring preferably having from 5 to 8 atoms, these possibly all being carbon atoms, or also comprising heteroatoms, preferably O, N, S or Si.

R₁ and R₂ are preferably the same as each other. Representative but non-limiting examples of these groups are chlorine, methyl, ethyl, butyl, benzyl, trimethylsilyl, methoxide, ethoxide, butoxide, dimethylamide, acetate, ethylenedioxide, and 1,4-tetramethylene.

In the compounds having formula (I) of the present invention a neutral ligand L may also be present, forming a co-ordinative bond with M. Included in the definition of L are different neutral ligands generally known in organometallic chemistry as co-ordinants of transition metals of group 4 in oxidation state +4. Examples of groups of these ligands are amines, particularly tertiary amines, linear or cyclic ethers, nitriles. The ligand L is preferably an ether, such as, for example, diethylether, methyl-t-butylether, and tetrahydrofuran.

Non-limiting examples of compounds having formula (I) are:
(COT)ZrCl₂; (COT)Zr[CH(Me₃Si)₂]₂
(COT)HfCl₂ [2,4-(Me₃Si)COT]ZrCl₂
(COT)TiCl₂ (COT)Zr(mes)₂
(PhCOT)ZrCl₂ (MeCOT)HfCl₂
(BrCH₂COT)Zr(C₃H₅)₂
wherein, in the above formulae, the following abbreviations are used: COT = cyclooctatetraene, Me = methyl, Ph = phenyl, mes = mesitylenyl, C₃H₅ = allyl.

As already specified, said component (A) can be obtained by putting at least one complex of M of the above formula (I) in contact with at least one organic compound of aluminium described above. This contact preferably takes place in an inert organic solvent for a time of at least 30 seconds, before component (A) and component (B) are interacted. There are no upper limits of time however before the subsequent mixing of the two components (A) and (B), as component (A) is sufficiently stable if maintained under normal upkeeping conditions of the organometallic derivatives of aluminium. The contact between the complex having formula (I) and the organic compound of aluminium is preferably maintained for a time of less than three hours.

Organic solvents suitable for the purpose are, for example, aliphatic and aromatic hydrocarbons such as n-heptane, n-decane, toluene, xylene, or their mixtures, with a preference for aromatic hydrocarbons. It is not necessary for the cyclooctatetraene complex having formula (I) to be soluble as such in the solvent used for the preparation of component (A), provided the adduct formed with the organic compound of aluminium is sufficiently soluble. The temperature at which component (A) is prepared is not critical, but is preferably between 0 and 70°C.

In the formation of component (A) the organometallic compound of aluminium is suitably combined with the complex having formula (I) in such a quantity that the atomic ratio Al/M is greater than or equal to 1, and preferably between 2 and 100. Particularly advantageous results are obtained with atomic ratios Al/M of between 5 and 50.

Although not examined in depth, it is presumed that during the contact of the complex having formula (I) with the aluminium compound there is a chemical reaction with the formation of one or more compounds mixed with each other containing both the metal M and aluminium (bimetal adduct). This adduct, which forms component (A) is surprisingly capable of polymerizing olefins in the presence of component (B), whereas the cyclooctatetraene complex having formula (I) as such is not active in polymerization, even if combined with component (B) with a high atomic ratio M'/M.

Component (B) of the catalyst of the present invention generally consists of an oxygenated organometallic derivative of a metal M' selected from Al, Ga and Sn. These derivatives are compounds characterized by the presence, in the molecule, of at least one M'-O bond. Typical compounds preferred as component (B) are aluminoxanes, galloxanes and stannoxanes, whose structure and preparation are widely described in the known art.

Typical aluminoxanes suitable for the present invention are polymeric or oligomeric compounds of aluminium previously defined, which basically consist of repetitive units having formula (III) above. Preferred aluminoxanes as component (B) of the catalyst of the present invention are those wherein R' in formula (III) is methyl, and the average number of repetitive units in the aluminoxane molecule is between 10 and 40.

In particular in the polymerization catalysts of alpha-olefins of the present invention the aluminoxane and component (A) comprising a metal-cyclooctatetraene derivative are used in such proportions that the atomic ratio between the aluminium in the aluminoxane and the metal M is within the range of 10 to 10000 and preferably between 500 and 5000.

As well as the above aluminoxanes, the definition of component (B) of the present invention also comprises galloxanes, and stannoxanes, which are known organo-oxygenated compounds of gallium and tin respectively having an activating behaviour analogous to that of aluminoxanes, although quantitatively different. In particular, the stannoxanes which can be used as component (B) of the present invention are normally monomeric or oligomeric compounds. The preparation and use of these compounds as polymerization co-catalysts of olefins in the presence of metallocene complexes of Ti or Zr are described in the U.S. patent 5.128.295 and U.S. patent 5.258.475. According to the present invention, the stannoxanes are normally used in such a quantity as to have an atomic ratio Sn/M of between 500 and 5000, to obtain a polymerization catalysts of olefins with the desired properties.

The scope of the present invention is obviously extended to those catalysts comprising one of components (A) or (B), or both, supported on an inert solid, preferably selected from silica, alumina and silicoaluminates. The catalysts obtained according to this aspect of the invention are supported catalysts, which are particularly advantageous in polymerization processes for the granulometric control of the polymer. Components (A) or (B) or both can be supported separately, or also after being combined, according to the known methods for the preparation of supported catalysts of the Ziegler-Natta type, which usually comprise at least one step in which the catalyst or one of its components are put in contact with the inert support, at temperatures varying from 0 to 150°C, depending on the stability of the component and type of support, in suspension in an inert solvent, generally hydrocarbon. The support is preferably subjected to activating treatment, thermal or chemical, capable of eliminating most of the water absorbed on its surface.

The catalyst of the present invention comprises the above components (A) and (B) and is obtained by putting these in contact with each other, normally in the presence of an inert hydrocarbon solvent of the type already mentioned above. This inert solvent can also be the same solvent in which component (A) was previously prepared.

For the preparation of the catalyst of the present invention, the two components (A) and (B) can be mixed with each other, in suitable proportions, preferably in solution or suspension in an inert liquid medium, at a temperature of between 0 and 150°C, preferably between 20 and 80°C. The mixing temperature however is not critical for obtaining the catalyst. When advisable for advantageously carrying out the polymerization process, the two components (A) and (B) can be fed separately to the polymerization reactor and mixed inside, in the presence of or without the monomer to be polymerized, thus forming the catalyst in situ, directly in the polymerization environment.

In all cases the contact between (A) and (B) is preferably maintained for a time of at least more than 10 seconds, more preferably between 30 seconds and 10 minutes, before the polymerization reaction starts.

As well as components (A) and (B), the catalyst of the present invention can comprise, if necessary or desirable for an optimum embodiment of the invention, all the other normal additives or components characteristic of catalysts of the Ziegler-Natta type known in the art, such as, for example, inert solvents, such as, aliphatic and/or aromatic hydrocarbons, co-ordinating additives (Lewis bases) such as, for example, tertiary amines, alcohols, halogenating agents such as silicon halides, halogenated hydrocarbons, preferably chlorinated.

The catalysts of the present invention are useful in the polymerization of ethylene giving linear polyethylene and in the copolymerization of ethylene with propylene or higher alpha-olefins giving copolymers having different properties depending on the specific polymerization conditions and the alpha-olefin itself, such as for example, low density linear polyethylene (LLDPE) or ethylene/propylene elastomers (EPR). The catalyst of the present invention can also be conveniently used for the terpolymerization of ethylene, propylene and a diene to obtain vulcanizable rubbers of the EPDM type. Particularly preferred is the homopolymerization of ethylene in the presence of said catalysts.

As well as polymers and copolymers of ethylene, the catalysts of the present invention can also be used with excellent results for the preparation of poly-α-olefins, such as polypropylene or poly-4-methylpentene.

The catalysts of the present invention can basically be used with excellent results in all known polymerization processes, such as, for example suspension processes, at low, medium or high pressure and a temperatures of between 50 and 240°C; solution processes in an inert diluent operating at pressures of between 1 and 15 MPa and temperatures of between 120 and 230°C; or in gas phase, with temperatures generally within the range of 60 to 160°C, at pressures of between 0.5 and 5 MPa. Hydrogen is normally used as molecular weight regulator.

The present invention is further described by the following examples, which however are purely illustrative and do not limit the scope of the invention itself. When not specifically described, the preparation of the equipment and experimental procedures are in accordance with the methods normally used in organometallic chemistry and in the polymerization of olefins, the most suitable choice for the embodiment of the present invention being left to the expert in the field without any supplementary experiments.

The characterization by means of ¹H-NMR spectroscopy, mentioned in the following examples, was carried out on a nuclear magnetic resonance spectrometer mod. Bruker MSL-2000, using CDCl₃ as solvent for each sample.

The measurement of the molecular weights was carried out by Gel-Permeation chromatography (GPC). The analyses of the polyethylene (PE) samples were carried out in 1,2,4-trichlorobenzene (stabilized with Santonox) at 135°C with a WATERS 150-CV chromatograph using a Waters differential refractometer as detector. The chromatographic separation was obtained with a set of µStyragel HT columns (Waters) of which three with pore dimensions of 103, 104, 105 respectively, and two with pore dimensions of 106 Å, with a flow rate of the eluant of 1 ml/min. The data were obtained and processed with Maxima 820 software version 3.30 (Millipore); for the calculation of the number average molecular weight (Mn) and the weight average molecular weight (Mw) the universal calibration principles were applied, selecting for the calibration polystyrene standards with molecular weights within the range of 6,500,000 - 2,000.

### Preparation of complexes with cyclooctatetraene

### i) Preparation of the complex (COT)₂Zr

4.5 g of metal potassium are suspended in 85 ml of tetrahydrofuran (THF) operating in an inert atmosphere in a 250 ml glass flask equipped with a cooler and magnetic stirring. 5 ml (44 mmoles) of cyclooctatetraene (FLUKA, 98%), are slowly added to the suspension, under stirring, so as to maintain a moderate reflux of the solvent. At the end of the addition the mixture is heated to 60°C for two hours, cooled to room temperature and left to rest for a night. The non-reacted potassium is separated by filtration. The filtrate is slowly added, over a period of about 4 hours at room temperature, to a solution of ZrCl₄(THF)₂ (8.22 g; 21.8 mmoles) in 85 ml of THF. The mixture is heated to reflux temperature for about 4 hours obtaining a reddish-blue coloured suspension. The KCl formed is filtered, washing with THF and adding the washing water to the filtrate. The solvent is then evaporated obtaining 2.67 g of a reddish-brown coloured solid residue, which proves to consist of (η⁸-C₈H₈) (η⁴-C₈H₈)Zr(THF) (abbreviated (COT)₂Zr), after characterization by ¹H-NMR. Yield = 42%.

### ii) Preparation of (COT)ZrCl₂(THF)

5.2 g (17.6 mmoles) of (COT)₂Zr, obtained as described above, are dissolved in 20 ml of THF, in a 250 ml glass flask, equipped with magnetic stirrer and a cooler. 5.8 g (15.4 mmoles) of ZrCl₄(THF)₂ dissolved in 25 ml of THF are added to this solution. The mixture is heated to reflux temperature for 10 hours, cooled to room temperature and the orange precipitate formed is filtered. The precipitate is washed three times with about 10 ml of THF and is dried, obtaining 4.2 g of solid product which proves to consist of (η⁸-C₈H₈)ZrCl₂ (THF) (abbreviated (COT)ZrCl₂(THF), after characterization by ¹H-NMR. Yield = 49%.

### iii) Preparation of (COT)ZrCl₂

The complex (COT)ZrCl₂(THF), prepared as above, is heated under vacuum (about 1 Pa) for two hours, in a glass flask immersed in a bath at 120°C. The solid becomes pink-coloured. At the end, the pressure is brought to normal value, the solid is suspended in 60 ml of xylene, and the suspension is maintained under stirring for 2 hours at 120C. The solid is left to deposit and the overlying colourless liquid is decanted. After drying under vacuum, a pink solid is obtained with a quantitative yield, which proves to be (COT)ZrCl₂.

### EXAMPLE 1

### Preparation of the catalyst precursor [(COT)ZrCl₂·nTIBAL]

25.9 mg (0.10 mmoles) of the complex (COT)ZrCl₂ prepared as above are suspended in a 50 ml tailed test-tube in 50 ml of anhydrous toluene. 1 ml of a 1 M solution of triisobutylaluminium (TIBAL) in anhydrous toluene is then added (atomic ratio Al/Zr = 10/1) and the mixture is stirred until the dissolution of the suspended solid. The catalyst precursor [(COT)ZrCl₂·nTIBAL] thus formed is left in a solution of toluene until use.

### EXAMPLES 2-4

The same procedure as example 1 is repeated for the preparation of another three catalyst precursors, using instead of TIBAL, but with the same atomic ratio Al/Zr = 10/1, the following aluminium compounds:

| Example | Al compound | Precursor |
|---|---|---|
| 2 | MAO* | [(COT)ZrCl₂·MAO] |
| 3 | Trimethylaluminium (TMA) | [(COT)ZrCl₂·nTMA] |
| 4 | Triethylaluminium (TEA) | [(COT)ZrCl₂·nTEA] |

| | | |
|---|---|---|
| * MAO = methylaluminoxane, solution at 10% by weight in toluene (of WITCO, containing 42.4 g/litre of aluminium). | | |

### EXAMPLE 5 (polymerization)

A BUCHI pressure-resistant reactor with an 0.5 litre glass reactor, equipped with a propeller stirrer, thermocouple and thermostatic jacket, is preliminarily maintained under vacuum for two hours and subsequently filled with nitrogen. The same vacuum/nitrogen operation is repeated another two times. 250 ml of anhydrous toluene (distilled on metal sodium) and 0.59 ml of a solution of MAO at 10% by weight in toluene (WITCO) are then charged. The temperature is brought to 70°C and 0.2 ml of the precursor solution [(COT)ZrCl₂·nTIBAL] previously prepared according to example 1 are added (atomic ratio Al/Zr = 2500). After about 5 minutes, under stirring, ethylene is charged up to a pressure of 405 kPa. The polymerization begins immediately. The polymerization is carried out for 60 minutes maintaining the reactor at 70°C under stirring, and continuously feeding ethylene to maintain the pressure constant at the preset value. At the end the polymer is recovered by precipitation with methanol acidified with HCl, filtration and successive washings with acetone. After drying, 5.9 g of polyethylene are obtained with a yield of 148 Kg_{PE}/g_{Zr}·h. The polymer thus obtained was characterized by gel-permeation chromatography according to the normal procedure used for polyethylene, using trichlorobenzene at 130°C as solvent. From this measurement Mₙ = 42,000 and M_{w} = 94,000.

### EXAMPLES 6-8

The polymerization process described in example 5 is repeated exactly, but using in each case, instead of [(COT)ZrCl₂·nTIBAL] one of the catalyst precursors prepared respectively according to one of the previous examples 2, 3 or 4 (ratio Al/Zr = 2500). The results of each test and the characteristics of the polymer obtained are shown in table 1 below.

### EXAMPLE 9 (comparative)

The polymerization procedure described in example 5 is repeated exactly, but using, instead of [(COT)ZrCl₂·nTIBAL], the complex (COT)ZrCl₂ obtained as described in the previous paragraph (iii) for the preparation of the complex with COT. At the end of the test a small quantity of polymer was obtained, as indicated in table 1 below. This shows the importance of the formation of the adduct (A) in the preparation of the catalyst of the present invention.

### EXAMPLE 10 (comparative)

The polymerization procedure described in example 5 is repeated exactly, but using, instead of MAO as component (B), an equivalent quantity of triisobutylaluminium (TIBAL), so as to maintain the ratio Al/Zr equal to 2500. Also in this case no formation of polymer was observed.

**Table 1**

| Ex. | Catalyst precursor | | Activity (kg_{PE}/g_{Zr}·h) | Mₙ (·10⁻³) | M_{w} (·10⁻³) |
|---|---|---|---|---|---|
| | Formula | (µmoles) | | | |
| 5 | [(COT)ZrCl₂·nTIBAL] | 0.392 | 148 | 42 | 94 |
| 6 | [(COT)ZrCl₂·MAO] | 0.392 | 14.1 | 48 | 112 |
| 7 | [(COT)ZrCl₂·nTMA] | 0.392 | 14.1 | 62 | 94 |
| 8 | [(COT)ZrCl₂·nTEA] | 0.392 | 84.6 | n.d. | n.d. |
| 9 | (COT)ZrCl₂ | 0.392 | 0.1 | n.d. | n.d. |
| n.d. = not determined | | | | | |

## Claims

1. Catalyst active in the (co)polymerization of α-olefins comprising at least one complex of a metal M selected from titanium, zirconium or hafnium (component A) and at least one compound of a metal M' different from M (component B), characterized in that:
(A) said complex of a metal M consists of an adduct obtained by putting an organometallic derivative of aluminium in contact with a complex having the formula (I)
**(COT)MR**_{**1**}**R**_{**2**}**L**_{**n**} **(I)**
wherein:
COT represents a divalent cyclooctatetraene ligand optionally substituted on the ring;
M is a metal selected from titanium, zirconium and hafnium, preferably zirconium;
R₁ and R₂ each independently represent a monovalent group having an anionic nature, or R₁ and R₂ together represent a divalent anionic group;
L is a neutral ligand, preferably containing an oxygen atom;
"n" is 0 or 1, preferably 0;
(B) said compound of a metal M' consists of an organo-oxygenated derivative of aluminium, gallium or tin.

2. Catalyst according to claim 1 wherein said organometallic derivative of aluminium in (A) is an aluminiumalkyl or an aluminiumalkylhalide or an aluminoxane.

3. Catalyst according to claim 2 wherein said aluminiumalkyl or aluminiumalkylhalide is a compound having the following general formula (II):
**AlR**_{**m**}**X**_{**3-m**} **(II)**
wherein:
each R is independently a linear or branched alkyl residue having from 1 to 10 crabon atoms;
each X is a halogen atom, preferably Cl or Br;and
m is a decimal number between 0.5 and 3, preferably between 1.5 and 3.

4. Catalyst according to claim 3 wherein in formula (II), R is an alkyl residue having from 2 to 4 carbon atoms, and "m" is 3.

5. Catalyst according to any of the previous claims, wherein the groups R₁ and R₂, in the previous formula (I) in claim 1, each independently represent a hydride or halide, a C₁-C₈ alkyl group, a C₃-C₁₂ alkylsilyl group, a cycloalkyl group, a C₆-C₁₀ aryl group, a C₁-C₈ alkoxyl group, a C₂-C₁₀ dialkylamide or C₄-C₂₀ alkylsilylamide group, or R₁ and R₂ jointly form a divalent group which forms with the metal M a ring preferably having from 5 to 8 atoms.

6. Catalyst according to claim 5, wherein in formula (II) of claim 1, R₁ and R₂ are equal to each other and are selected in the group consisting of chloride, methyl, ethyl, butyl, benzyl, trimethylsilyl, methoxide, ethoxide, butoxide, dimethylamide, ethylenedioxide and 1,4-tetramethylene.

7. Catalyst according to any of the previous claims, wherein the group COT in formula (I) of claim 1 is C₈H₈.

8. Catalyst according to any of the previous claims from 1 to 6, wherein the group COT in formula (I) of claim 1 is a cyclooctatetraene ring wherein from 1 to 8, preferably from 1 to 4, hydrogen atoms are substituted with a group independently selected from Cl, Br and aliphatic or aromatic organic groups having from 1 to 10 carbon atoms, which can possibly also contain one or more heteroatoms selected from O, N, Si, Ge, P, S or halogen.

9. Catalyst according to any of the previous claims, wherein the complex having formula (I) is selected from the following compounds:
(COT)ZrCl₂; (COT)Zr[CH(Me₃Si)₂]₂
(COT)HfCl₂ [2,4-(Me₃Si)COT]ZrCl₂
(COT)TiCl₂ (COT)Zr(mes)₂
(PhCOT)ZrCl₂ (MeCOT)HfCl₂
(BrCH₂COT)Zr(C₃H₅)₂
wherein, in the above formulae, the following abbreviations are used: COT = cyclooctatetraene, Me = methyl, Ph = phenyl, mes = mesitylenyl, C₃H₅ = allyl.

10. Catalyst according to any of the previous claims, wherein, in (A), the respective quantities of the organometallic compound of aluminium and the complex having formula (I) in claim 1 are such that the atomic ratio Al/M is between 2 and 100, and is preferably between 5 and 50:

11. Catalyst according to any of the previous claims, wherein, in (A), said adduct is obtained in a mixture with an inert hydrocarbon solvent.

12. Catalyst according to any of the previous claims, wherein the ratio between M in (A) and M' in (B) is within the range of 10 and 10000 and is preferably between 100 and 5000.

13. Catalyst according to any of the previous claims, wherein the organo-oxygenated compound of M' in (B) is an aluminoxane.

14. Catalyst according to the previous claim 13, wherein said aluminoxane is oligo- or poly-meric methylaluminoxane containing from 4 to 70, preferably from 10 to 30, repetitive units.

15. Process for the (co)polymerization of α-olefins comprising feeding an α-olefin to a polymerization reactor in the presence of a catalyst, and polymerizing said α-olefin at a temperature of between 20 and 200°C and a pressure of between 0.2 and 100 MPa, characterized in that said catalyst is a polymerization catalyst according to any of the previous claims from 1 to 14.

16. Process according to the previous claim 15, carried out in suspension, at low, medium or high pressure and at a temperature of between 50 and 240°C, or in solution in an inert diluent, at pressures of between 1 and 15 MPa and temperatures of between 120 and 230°C, or in gas phase, with temperatures of between 60 and 160°C, at pressures of between 0.5 and 5 MPa.

17. Process according to any of the previous claims 15 or 16, wherein said α-olefin is ethylene.

18. Process according to any of the previous claims 15 to 17, wherein said catalyst is formed in situ feeding said components (A) and (B) separately to the polymerization reactor.

## Patentansprüche

1. Katalysator, der in der (Co-)Polymerisation von α-Olefinen aktiv ist und mindestens einen Komplex eines aus Titan, Zirkonium oder Hafnium ausgewählten Metalls M (Komponente A) und mindestens eine Verbindung eines von M verschiedenen Metalls M' (Komponente B) umfaßt, dadurch gekennzeichnet, daß:
(A) der Komplex eines Metalls M aus einem Addukt besteht, das durch Kontaktieren eines organometallischen Derivats von Aluminium mit einem Komplex mit der Formel (I) erhalten wird
**(COT)MR**_{**1**}**R**_{**2**}**L**_{**n**} **(I)**
worin:
COT für einen zweiwertigen Cyclooctatetraen-Liganden, der gegebenenfalls am Ring substituiert ist, steht;
M ein aus Titan, Zirkonium und Hafnium ausgewähltes Metall, vorzugsweise Zirkonium, ist;
R₁ und R₂ jeweils unabhängig eine einwertige Gruppe von anionischer Natur darstellen oder R₁ und R₂ zusammen eine zweiwertige anionische Gruppe bedeuten;
L ein neutraler Ligand, der vorzugsweise ein Sauerstoffatom enthält, ist;
"n" 0 oder 1, vorzugsweise 0, ist;
(B) die Verbindung eines Metalls M' aus einem Organo-oxygenierten Derivat von Aluminium, Gallium oder Zinn besteht.

2. Katalysator nach Anspruch 1, in welchem das organometallische Derivat von Aluminium in (A) ein Aluminiumalkyl oder ein Aluminiumalkylhalogenid oder ein Aluminoxan ist.

3. Katalysator nach Anspruch 2, in welchem das Aluminiumalkyl oder Aluminiumalkylhalogenid eine Verbindung mit der folgenden allgemeinen Formel (II) ist:
**AIR**_{**m**}**X**_{**3-m**} **(II)**
worin:
jedes R unabhängig einen linearen oder verzweigten Alkylrest mit 1 bis 10 Kohlenstoffatomen darstellt;
jedes X ein Halogenatom, vorzugsweise Cl oder Br, ist; und
m eine Dezimalzahl zwischen 0,5 und 3, vorzugsweise zwischen 1,5 und 3, ist.

4. Katalysator nach Anspruch 3, in welchem in Formel (II) R ein Alkylrest mit 2 bis 4 Kohlenstoffatomen ist und "m" 3 ist.

5. Katalysator nach irgendeinem der vorangehenden Ansprüche, in welchem die Gruppen R₁ und R₂ in der obigen Formel (I) in Anspruch 1 jeweils unabhängig für ein Hydrid oder Halogenid, eine C₁-C₈-Alkylgruppe, eine C₃-C₁₂-Alkylsilylgruppe, eine Cycloalkylgruppe, eine C₆-C₁₀-Arylgruppe, eine C₁-C₈-Alkoxylgruppe, eine C₂-C₁₀-Dialkylamid- oder C₄-C₂₀-Alkylsilylamidgruppe stehen oder R₁ oder R₂ gemeinsam eine zweiwertige Gruppe bilden, die mit dem Metall M einen Ring bildet, der vorzugsweise 5 bis 8 Atome aufweist.

6. Katalysator nach Anspruch 5, in welchem in Formel (II) von Anspruch 1 R₁ und R₂ identisch sind und aus der Gruppe ausgewählt sind, die aus Chlorid, Methyl, Ethyl, Butyl, Benzyl, Trimethylsilyl, Methoxid, Ethoxid, Butoxid, Dimethylamid, Ethylendioxid und 1,4-Tetramethylen besteht.

7. Katalysator nach irgendeinem der vorangehenden Ansprüche, in welchem die Gruppe COT in Formel (I) von Anspruch 1 C₈H₈ ist.

8. Katalysator nach irgendeinem der vorangehenden Ansprüche 1 bis 6, in welchem die Gruppe COT in Formel (I) von Anspruch 1 ein Cyclooctatetraen-Ring ist, in dem 1 bis 8, vorzugsweise 1 bis 4, Wasserstoffatome durch eine Gruppe ersetzt sind, die unabhängig ausgewählt ist aus Cl, Br und aliphatischen und aromatischen organischen Gruppen mit 1 bis 10 Kohlenstoffatomen, die möglicherweise auch ein oder mehrere aus O, N, Si, Ge, P, S oder Halogen ausgewählte Heteroatome enthalten.

9. Katalysator nach irgendeinem der vorangehenden Ansprüche, in welchem der Komplex mit der Formel (I) aus den folgenden Verbindungen ausgewählt ist:
(COT)ZrCl₂; (COT)Zr[CH(Me₃Si)₂]₂
(COT)HfCl₂ [2,4-(Me₃Si)COT]ZrCl₂
(COT)TiCl₂ (COT)Zr(mes)₂
(PhCOT)ZrCl₂ (MeCOT)HfCl₂
(BrCH₂COT)Zr(C₃H₅)₂
wobei in den obigen Formeln die folgenden Abkürzungen verwendet sind: COT = Cyclooctatetraen, Me = Methyl, Ph = Phenyl, mes = Mesitylenyl, C₃H₅ = Allyl.

10. Katalysator nach irgendeinem der vorangehenden Ansprüche, in welchem in (A) die entsprechenden Mengen der organometallischen Verbindung von Aluminium und des Komplexes mit der Formel (1) in Anspruch 1 derart sind, daß das Atomverhältnis Al/M zwischen 2 und 100 liegt und vorzugsweise zwischen 5 und 50 liegt.

11. Katalysator nach irgendeinem der vorangehenden Ansprüche, in welchem in (A) das Addukt in einer Mischung in einem inerten Kohlenwasserstoff-Lösungsmittel erhalten wird.

12. Katalysator nach irgendeinem der vorangehenden Ansprüche, in welchem das Verhältnis von M in (A) und M' in (B) im Bereich von 10 bis 10.000 liegt und vorzugsweise zwischen 100 und 5000 beträgt.

13. Katalysator nach irgendeinem der vorangehenden Ansprüche, in welchem die Organo-oxygenierte Verbindung von M' in (B) ein Aluminoxan ist.

14. Katalysator nach dem vorangehenden Anspruch 13, in welchem das Aluminoxan oligo- oder polymeres Methylaluminoxan ist, das 4 bis 70, vorzugsweise 10 bis 30, Wiederholungseinheiten enthält.

15. Verfahren zur (Co-)Polymerisation von α-Olefinen, umfassend die Zuführung eines α-Olefins zu einem Polymerisationsreaktor in Anwesenheit eines Katalysators und die Polymerisation des α-Olefins bei einer Temperatur zwischen 20 und 200°C und einem Druck zwischen 0,2 und 100 MPa, dadurch gekennzeichnet, daß der Katalysator ein Polymerisationskatalysator gemäß irgendeinem der vorangehenden Ansprüche 1 bis 14 ist.

16. Verfahren nach dem vorangehenden Anspruch 15, durchgeführt in Suspension bei niedrigem, mittlerem oder hohem Druck und bei einer Temperatur zwischen 50 und 240°C oder in Lösung in einem inerten Lösungsmittel bei Drücken zwischen 1 und 15 MPa und Temperaturen zwischen 120 und 230°C oder in der Gasphase mit Temperaturen zwischen 60 und 160°C bei Drücken zwischen 0,5 und 5 MPa.

17. Verfahren nach irgendeinem der vorangehenden Ansprüche 15 oder 16, in welchem das α-Olefin Ethylen ist.

18. Verfahren nach irgendeinem der vorangehenden Ansprüche 15 bis 17, in welchem der Katalysator in situ gebildet wird, wobei die Komponenten (A) und (B) dem Polymerisationsreaktor getrennt zugeführt werden.

## Revendications

1. Catalyseur actif en (co)polymérisation d'α-oléfines, comportant au moins un complexe d'un métal M, choisi parmi le titane, le zirconium et le hafnium (composant A), et au moins un composé d'un métal M' différent de M (composant B), caractérisé en ce que :
(A) ledit complexe de métal M consiste en un produit d'addition que l'on obtient en mettant un dérivé organométallique de l'aluminium en contact avec un complexe de formule (I) :
(COT)MR₁R₂Lₙ (I)
dans laquelle :
COT représente un ligand cyclooctatétraène divalent, dont le cycle porte éventuellement des substituants ;
M représente un métal choisi parmi le titane, le zirconium et le hafnium, et de préférence le zirconium ;
R₁ et R₂ représentent chacun, indépendamment, un groupe monovalent à caractère anionique, ou bien R₁ et R₂ représentent conjointement un groupe anionique divalent ;
L représente un ligand neutre, de préférence contenant un atome d'oxygène ;
n vaut 0 ou 1, et de préférence 0 ; et
(B) ledit composé d'un métal M' consiste en un dérivé organo-oxygéné de l'aluminium, du gallium ou de l'étain.

2. Catalyseur conforme à la revendication 1, dans lequel ledit dérivé organométallique de l'aluminium mentionné en (A) est un alkyl-aluminium, un halogénure d'alkyl-aluminium ou un aluminoxane.

3. Catalyseur conforme à la revendication 2, dans lequel ledit alkyl-aluminium ou halogénure d'alkyl-aluminium est un composé de formule générale suivante (II) :
AlRₘX₃₋ₘ (II)
dans laquelle
chaque R représente indépendamment un groupe alkyle linéaire ou ramifié, comportant de 1 à 10 atomes de carbone,
chaque X représente un atome d'halogène, de préférence de chlore ou de brome, et
m représente un nombre décimal valant de 0,5 à 3, et de préférence de 1,5 à 3.

4. Catalyseur conforme à la revendication 3, dans lequel, dans la formule (II), R représente un groupe alkyle comportant de 2 à 4 atomes de carbone, et m vaut 3.

5. Catalyseur conforme à l'une des revendications précédentes, dans lequel les symboles R₁ et R₂ de la formule (I) indiquée précédemment dans la revendication représentent chacun, indépendamment, un ligand hydrure ou halogénure, un groupe alkyle en C₁-C₈, un groupe alkyl-silyle en C₃-C₁₂, un groupe cycloalkyle, un groupe aryle en C₆-C₁₀, un groupe alcoxy en C₁-C₈, un ligand dialkylamido en C₂-C₁₀ ou un ligand alkylsilylamido en C₄-C₂₀, ou bien R₁ et R₂ représentent conjointement un groupe divalent qui constitue, avec l'atome de métal M, un cycle qui comporte de préférence de 5 à 8 atomes.

6. Catalyseur conforme à la revendication 5, dans lequel, dans la formule (I) indiquée dans la revendication 1, R₁ et R₂ représentent tous les deux le même ligand choisi dans l'ensemble constitué par les ligands chlorure, méthyle, éthyle, butyle, benzyle, triméthylsilyle, méthoxy, éthoxy, butoxy, diméthylamido, éthylènedioxy et 1,4-tétraméthylène.

7. Catalyseur conforme à l'une des revendications précédentes, dans lequel, dans la formule (I) indiquée dans la revendication 1, le groupe symbolisé par COT est un groupe C₈H₈.

8. Catalyseur conforme à l'une des revendications précédentes 1 à 6, dans lequel, dans la formule (I) indiquée dans la revendication 1, le groupe symbolisé par COT est un cycle de type cyclooctatétraène où de 1 à 8 et de préférence de 1 à 4 atomes d'hydrogène sont remplacés par des substituants choisis indépendamment parmi les atomes de chlore et de brome et des groupes organiques aliphatiques ou aromatiques comportant de 1 à 10 atomes de carbone, qui peuvent aussi, le cas échéant, comporter un ou plusieurs hétéroatomes choisis parmi- des atomes d'oxygène, d'azote, de silicium, de germanium, de phosphore, de soufre et d'halogène.

9. Catalyseur conforme à l'une des revendications précédentes, dans lequel le complexe de formule (I) est choisi parmi les composés suivants :
(COT)ZrCl₂ (CGT)Zr[CH(Me₂Si)₂]₂
(COT)HfCl₂ [2,4-(Me₃Si)COT]ZrCl₂
(COT)TiCl₂ (CGT)Zr(mes)₂
(PhCOT)ZrCl₂ (MeCOT) HfCl₂
(BrCH₂COT)Zr(C₃H₅)₂
les abréviations suivantes étant utilisées dans les formules ci-dessus : COT = cyclooctatétraène, Me = méthyle, Ph = phényle, mes = mésitylényle, C₃H₅ = allyle.

10. Catalyseur conforme à l'une des revendications précédentes, dans lequel, dans le composant (A), les quantités respectives de composé organométallique de l'aluminium et de complexe de formule (I) indiquée dans la revendication 1 sont telles que le rapport atomique Al/M vaille de 2 à 100, et de préférence de 5 à 50.

11. Catalyseur conforme à l'une des revendications précédentes, pour lequel on obtient ledit produit d'addition, mentionné à propos du composant (A), à l'état de mélange avec un solvant inerte qui est un hydrocarbure.

12. Catalyseur conforme à l'une des revendications précédentes, dans lequel le rapport entre le métal M du composant (A) et le métal M' du composant (B) se situe dans l'intervalle allant de 10 à 10 000, et de préférence, dans l'intervalle allant de 100 à 5 000.

13. Catalyseur conforme à l'une des revendications précédentes, dans lequel le composé organo-oxygéné de métal M' du composant (B) est un aluminoxane.

14. Catalyseur conforme à la revendication 13, dans lequel ledit aluminoxane est un méthylaluminoxane oligomère ou polymère comportant de 4 à 70 et de préférence de 10 à 30 motifs répétitifs.

15. Procédé de (co)polymérisation d'α-oléfines, qui comporte le fait d'introduire une α-oléfine dans un réacteur de polymérisation, en présence d'un catalyseur, et le fait de faire polymériser cette α-oléfine à une température de 20 à 200 °C et sous une pression de 0,2 à 100 MPa, ce procédé étant caractérisé en ce que ledit catalyseur est un catalyseur de polymérisation conforme à l'une des revendications 1 à 14.

16. Procédé conforme à la revendication 15, mis en oeuvre en suspension, sous une pression faible, moyenne ou forte et à une température de 50 à 240 °C, ou en solution dans un diluant inerte, sous une pression de 1 à 15 MPa et à une température de 120 à 230 °C, ou encore en phase gazeuse, à une température de 60 à 160 °C et sous une pression de 0,5 à 5 MPa.

17. Procédé conforme à l'une des revendications 15 et 16, dans lequel ladite α-oléfine est de l'éthylène.

18. Procédé conforme à l'une des revendications 15 à 17, dans lequel on forme in situ ledit catalyseur en introduisant séparément lesdits composants (A) et (B) dans le réacteur de polymérisation.
